(19) **Europäisches Patentamt**
**European Patent Office**
**Office européen des brevets**

(11) **EP 3 958 597 B1**

(12) **EUROPEAN PATENT SPECIFICATION**

(45) Date of publication and mention
of the grant of the patent:
**24.09.2025 Bulletin 2025/39**

(21) Application number: **20834133.9**

(22) Date of filing: **03.07.2020**

(51) International Patent Classification (IPC):
*H04W 4/46* $^{(2018.01)}$

(52) Cooperative Patent Classification (CPC):
**H04L 5/0053; H04L 5/0005; H04L 5/0078;**
**H04L 5/0094; H04W 4/40**

(86) International application number:
**PCT/CN2020/100239**

(87) International publication number:
**WO 2021/000954 (07.01.2021 Gazette 2021/01)**

(54) **DATA TRANSMISSION METHOD AND COMMUNICATION DEVICE**

**DATENÜBERTRAGUNGSVERFAHREN UND KOMMUNIKATIONSVORRICHTUNG**

**PROCÉDÉ DE TRANSMISSION DE DONNÉES ET DISPOSITIF DE COMMUNICATION**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.07.2019 CN 201910607503**

(43) Date of publication of application:
**23.02.2022 Bulletin 2022/08**

(73) Proprietor: **Huawei Technologies Co., Ltd.**
**Shenzhen, Guangdong 518129 (CN)**

(72) Inventors:
• **DONG, Lei**
**Shenzhen, Guangdong 518129 (CN)**
• **ZHANG, Jinfang**
**Shenzhen, Guangdong 518129 (CN)**
• **LU, Lei**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
EP-A1- 3 500 011          CN-A- 109 792 370
US-A1- 2017 048 905

• VIVO: "Discussion on mode 1 resource allocation mechanism", vol. RAN WG1, no. Reno, USA; 20190513 - 20190517, 1 May 2019 (2019-05-01), pages 1 - 13, XP051708179, Retrieved from the Internet <URL:http://www.3gpp.org/ftp/tsg%5Fran/WG1%5FRL1/TSGR1%5F97/Docs/R1%2D1906138%2Ezip> [retrieved on 20190501]
• HUAWEI ET AL: "Variable number of transmissions for V2V", vol. RAN WG1, no. Busan, Korea; 20160411 - 20160415, 2 April 2016 (2016-04-02), XP051079968, Retrieved from the Internet <URL:http://www.3gpp.org/ftp/tsg_ran/WG1_RL1/TSGR1_84b/Docs/> [retrieved on 20160402]
• VIVO: "Discussion on mode 1 resource allocation mechanism", 3GPP DRAFT; R1-1906138_DISCUSSION ON MODE 1 RESOURCE ALLOCATION MECHANISM, vol. RAN WG1, 1 May 2019 (2019-05-01), Reno, USA, pages 1 - 13, XP051708179
• HUAWEI; HISILICON: "Variable number of transmissions for V2V", 3GPP DRAFT; R1-162121, vol. RAN WG1, 2 April 2016 (2016-04-02), Busan, Korea, pages 1 - 6, XP051079968
• SPREADTRUM COMMUNICATIONS: "Consideration on physical layer procedures", 3GPP DRAFT; R1-1813075, 16 November 2018 (2018-11-16), pages 1 - 5, XP051479343

**Description**

**CROSS-REFERENCE TO RELATED APPLICATION**

**TECHNICAL FIELD**

This application relates to the field of communication technologies, and in particular, to a data transmission method and a communication apparatus.

**BACKGROUND**

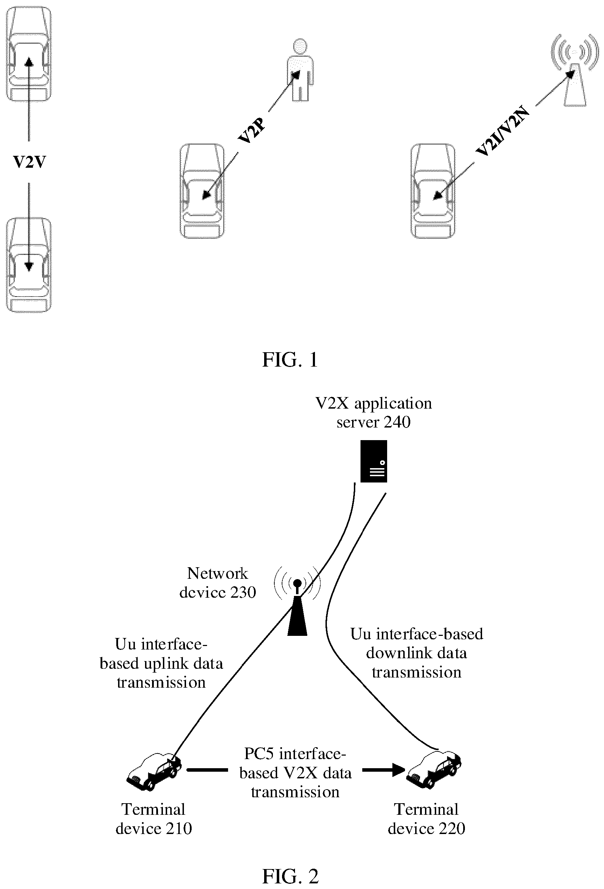

A vehicle-to-everything (vehicle-to-everything, V2X) communication technology is a next-generation information communication technology that can connect a vehicle to everything. As shown in FIG. 1, the V2X technology includes vehicle-to-vehicle (vehicle to vehicle, V2V) communication, vehicle-to-pedestrian (vehicle to pedestrian, V2P) communication, vehicle-to-infrastructure (vehicle to infrastructure, V2I) communication, vehicle-to-network (vehicle to network, V2N) communication, and the like.

In an existing V2X technology, one transport block (transmission block, TB) supports a maximum of two times of transmission, that is, one time of initial transmission and one time of retransmission, and a same frequency domain resource is used during the initial transmission and the retransmission. In consideration of more application scenarios with higher complexity in the future, the V2X technology needs to support more data transmission times and higher reliability. However, an existing solution that supports a maximum of two times of transmission cannot satisfy a reliability requirement. In addition, a same frequency domain resource is used during initial transmission and retransmission. Consequently, a frequency diversity gain is not fully utilized.

3GPP DRAFT R1-1906138 proposes that for dynamic scheduling/resource allocation, DCI should include a cross-carrier indicator, resource allocation for PSSCH/SCI, time offset, number of repetition transmission type, resource pool indicator and time gap between transmissions.

3GPP DRAFT R1-162121 proposes that the number of V2V transmissions is variable, and a number of transmission field in the SCI is added for V2V transmissions.

**SUMMARY**

The invention is set out in the appended set of claims. Embodiments of this application provide a data transmission method and a communication apparatus, to provide a data transmission solution that supports a plurality of times of data retransmission and frequency hopping, to improve data transmission reliability.

According to a first aspect, an embodiment of this application provides a data transmission method. The method may be applied to a first terminal device, and the method includes: The first terminal device obtains a quantity n of transmission times and interval indication information. The interval indication information is used to indicate a time domain interval, a frequency domain interval, or a time domain interval and a frequency domain interval. The time domain interval is used to indicate a time domain interval between a time domain resource for sending first data for an $i^{th}$ time and a time domain resource for sending the first data for an $(i-1)^{th}$ time. The frequency domain interval is used to indicate a frequency domain interval between a frequency domain resource for sending the first data for the $i^{th}$ time and a frequency domain resource for sending the first data for the $(i-1)^{th}$ time, where $1 \leq i \leq n$, and n is a positive integer greater than or equal to 2. The first terminal device sends sidelink control information to a second terminal device, where the sidelink control information is used to indicate the quantity n of transmission times, the interval indication information, and i. The first terminal device determines, based on the quantity n of transmission times and the interval indication information, a first time-frequency resource used to send the first data for the $i^{th}$ time. The first terminal device sends the first data to the second terminal device on the first time-frequency resource.

According to the technical solution provided in this embodiment of this application, the first terminal device may determine, based on the quantity n of transmission times and the time domain interval, the frequency domain interval, or the time domain interval and the frequency domain interval that are indicated in the interval indication information, the time-frequency resource used when the first data is transmitted for the $i^{th}$ time. In this way, in different transmission processes of the first data, the first terminal device may send the first data by using different time-frequency resources, so that a time diversity gain and a frequency diversity gain can be fully utilized, and data transmission reliability can be effectively improved. In addition, the quantity n of transmission times in this embodiment of this application is greater than or equal to 2, indicating that a plurality of times of retransmission of the first data may be supported. In addition, even if the quantity n of transmission times is 2 and the first data is retransmitted only once, a time-frequency resource different from that used during initial transmission can be used for retransmission.

In a possible design, that the first terminal device obtains a quantity n of transmission times and interval indication information may be that the first terminal device receives first indication information from a network device, where the first indication information is used to indicate the quantity n of transmission times and the interval indication information, and determines the quantity n of transmission times and the interval indication information based on the first indication information. Alternatively, that the first terminal device obtains a quantity n of transmission times and interval indication information may be that the first terminal device determines the quantity n of transmission times and the interval indication information based on quality of service QoS corresponding to the first data.

According to the technical solution provided in this embodiment of this application, the first terminal device may obtain the quantity n of transmission times and the interval indication information that are of the first data from the network device, or may determine the quantity n of transmission times and the interval indication information that are of the first data based on a QoS requirement of a service of the first terminal device. This has better flexibility.

In a possible design, that the first terminal device determines a first time-frequency resource used to send the first data for the i$^{th}$ time may be: The first terminal device determines a time domain start position for sending the first data for the i$^{th}$ time, where the time domain start position satisfies:

$$\left(t_n^{SL} + (i-1) \times SF_{time-gap}\right) \% T_{max}^{SL}$$

$t_n^{SL}$ is a time domain start position for sending the first data for the first time, $SF_{time\text{-}gap}$ is the time domain interval, and $T_{max}^{SL}$ is a maximum length of a time domain resource pool. The first terminal device determines the first time-frequency resource based on the time domain start position for sending the first data for the i$^{th}$ time.

According to the technical solution in this embodiment of this application, in different transmission processes of the first data, different time domain resources may be used, and may change regularly based on the time domain interval indicated in the interval indication information, so that a time diversity gain can be fully utilized, and data transmission reliability can be improved.

In a possible design, that the first terminal device determines a first time-frequency resource used to send the first data for the i$^{th}$ time may further be: The first terminal device determines a frequency domain start position for sending the first data for the i$^{th}$ time, where the frequency domain start position satisfies:

$$\left(m + (i-1) \times SF_{frequency-gap}\right) \% N_{subCH}$$

m is a frequency domain start position for sending the first data for the first time, $SF_{frequency\text{-}gap}$ is the frequency domain interval, and $N_{subCH}$ is a width of a frequency domain resource pool. The first terminal device determines a first time domain resource based on the frequency domain start position for sending the first data for the i$^{th}$ time.

According to the technical solution in this embodiment of this application, in different transmission processes of the first data, different frequency domain resources may be used, and may change regularly based on the frequency domain interval indicated in the interval indication information, so that a frequency diversity gain can be fully utilized, and data transmission reliability can be improved.

In a possible design, the frequency domain interval and the time domain interval may satisfy the following relationship:

$$SF_{frequency-gap} = SF_{time-gap}/K \ \text{ or } \ SF_{frequency-gap} = SF_{time-gap} \times K$$

*K* is an integer greater than or equal to 1.

According to the technical solution in this embodiment of this application, there may be a specific association relationship between the frequency domain interval and the time domain interval. In this way, only the time domain interval may be indicated in the interval indication information, and the frequency domain interval may be derived based on the association relationship. Therefore, an objective of indirectly indicating the frequency domain interval in the interval indication information is implemented. Similarly, only the frequency domain interval may alternatively be indicated in the interval indication information, and the time domain interval may be derived based on the association relationship. Therefore, an objective of indirectly indicating the time domain interval in the interval indication information is implemented. It can be learned that, through setting of the association relationship between the time domain interval and the frequency domain interval, only one piece of interval information may be indicated in the interval indication information. In this way, while system resource overheads are reduced, time domain resources and frequency domain resources used in different transmission processes of the first data may also be changed, to fully utilize the time diversity gain and the frequency diversity gain.

In a possible design, that the first terminal device determines a first time-frequency resource used to send the first data for the i$^{th}$ time may further be: The first terminal device determines a frequency domain start position for sending the first data for the ith time, where the frequency domain start position satisfies:

$$\left(m + (i-1) \times ((N_{subCH} - L_{subCH} + 1)/n)\right)\%N_{subCH}$$

m is a frequency domain start position for sending the first data for the first time, $N_{subCH}$ is a width of a frequency domain resource pool, $L_{subCH}$ is a frequency domain width occupied by the first data. The first terminal device determines a first time domain resource based on the frequency domain start position for sending the first data for the ith time.

According to the technical solution in this embodiment of this application, in different transmission processes of the first data, different frequency domain resources may be used, and a frequency resource used for each time of data transmission may change regularly based on a configuration parameter of a related resource, so that a frequency diversity gain can be fully utilized, and data transmission reliability can be improved.

According to a second aspect, an embodiment of this application provides a data transmission method. The method may be applied to a second terminal device, and the method includes: The second terminal device receives sidelink control information from a first terminal device. The sidelink control information is used to indicate a quantity n of transmission times, interval indication information, and i. i is used to indicate that first data is transmitted for an ith time. The interval indication information is used to indicate a time domain interval, a frequency domain interval, or a time domain interval and a frequency domain interval. The time domain interval is used to indicate a time domain interval between a time domain resource for sending the first data for the ith time and a time domain resource for sending the first data for an (i-1)th time. The frequency domain interval is used to indicate a frequency domain interval between a frequency domain resource for sending the first data for the ith time and a frequency domain resource for sending the first data for the (i-1)th time, where $1 \leq i \leq n$, and n is a positive integer greater than or equal to 2. The second terminal device determines, based on the quantity n of transmission times and the interval indication information, a first time-frequency resource used to receive the first data for the ith time. The second terminal device receives, on the first time-frequency resource, the first data sent by the first terminal device.

According to the technical solution provided in this embodiment of this application, the second terminal device receives the sidelink control information sent by the first terminal device, and may determine, based on the quantity n of transmission times indicated in the sidelink control information and the time domain interval, the frequency domain interval, or the time domain interval and the frequency domain interval indicated in the interval indication information, the time-frequency resource used when the first data is transmitted for the ith time. In this way, in different transmission processes of the first data, the second terminal device may receive the first data by using different time-frequency resources, so that a time diversity gain and a frequency diversity gain can be fully utilized, and data transmission reliability can be effectively improved. In addition, the quantity n of transmission times in this embodiment of this application is greater than or equal to 3, indicating that a plurality of times of retransmission of the first data may be supported. In addition, even if the quantity n of transmission times is 2 and the first data is retransmitted only once, a time-frequency resource different from that used during initial transmission can be used for retransmission.

In a possible design, that the second terminal device determines a first time-frequency resource used to receive the first data for the ith time may be: The second terminal device determines a time domain start position for receiving the first data for the ith time, where the time domain start position satisfies:

$$\left(t_n^{SL} + (i-1) \times SF_{time-gap}\right)\%T_{max}^{SL}$$

$t_n^{SL}$ is a time domain start position when the first terminal device sends the first data for the first time, $SF_{time-gap}$ is the time domain interval, and $T_{max}^{SL}$ is a maximum length of a time domain resource pool. The second terminal device determines the first time-frequency resource based on the time domain start position for receiving the first data for the ith time.

According to the technical solution in this embodiment of this application, in different transmission processes of the first data, different time domain resources may be used, and may change regularly based on the time domain interval indicated in the interval indication information, so that a time diversity gain can be fully utilized, and data transmission reliability can be improved.

In a possible design, that the second terminal device determines a first time-frequency resource used to receive the first data for the ith time may further be: The second terminal device determines a frequency domain start position for receiving the first data for the ith time, where the frequency domain start position satisfies:

$$\left(m + (i-1) \times SF_{frequency-gap}\right)\%N_{subCH}$$

m is a frequency domain start position when the first terminal device sends the first data for the first time, $SF_{frequency-gap}$ is the frequency domain interval, and $N_{subCH}$ is a width of a frequency domain resource pool. The second terminal device determines a first time domain resource based on the frequency domain start position for receiving the first data for the $i^{th}$ time.

According to the technical solution in this embodiment of this application, in different transmission processes of the first data, different frequency domain resources may be used, and may change regularly based on the frequency domain interval indicated in the interval indication information, so that a frequency diversity gain can be fully utilized, and data transmission reliability can be improved.

In a possible design, the frequency domain interval and the time domain interval may satisfy the following relationship:

$$SF_{frequency-gap} = SF_{time-gap}/K \ \text{ or } \ SF_{frequency-gap} = SF_{time-gap} \times K$$

$K$ is an integer greater than or equal to 1.

According to the technical solution in this embodiment of this application, there may be a specific association relationship between the frequency domain interval and the time domain interval. In this way, only the time domain interval may be indicated in the interval indication information, and the frequency domain interval may be derived based on the association relationship. Therefore, an objective of indirectly indicating the frequency domain interval in the interval indication information is implemented. Similarly, only the frequency domain interval may alternatively be indicated in the interval indication information, and the time domain interval may be derived based on the association relationship. Therefore, an objective of indirectly indicating the time domain interval in the interval indication information is implemented. It can be learned that, through setting of the association relationship between the time domain interval and the frequency domain interval, only one piece of interval information may be indicated in the interval indication information. In this way, while system resource overheads are reduced, time domain resources and frequency domain resources used in different transmission processes of the first data may also be changed, to fully utilize the time diversity gain and the frequency diversity gain.

In a possible design, that the second terminal device determines a first time-frequency resource used to receive the first data for the $i^{th}$ time may further be: The first terminal device determines a frequency domain start position for receiving the first data for the $i^{th}$ time, where the frequency domain start position satisfies:

$$\left(m + (i - 1) \times ((N_{subCH} - L_{subCH} + 1)/n)\right)\%N_{subCH}$$

m is a frequency domain start position when the first terminal device sends the first data for the first time, $N_{subCH}$ is a width of a frequency domain resource pool, and $L_{subCH}$ is a frequency domain width occupied by the first data. The second terminal device determines a first time domain resource based on the frequency domain start position for receiving the first data for the $i^{th}$ time.

According to the technical solution in this embodiment of this application, in different transmission processes of the first data, different frequency domain resources may be used, and a frequency resource used for each time of data transmission may change regularly based on a configuration parameter of a related resource, so that a frequency diversity gain can be fully utilized, and data transmission reliability can be improved.

According to a third aspect, an embodiment of this application provides a communication apparatus. The communication apparatus has a function of implementing the first terminal device in any one of the first aspect or the possible designs of the first aspect, or has a function of implementing the second terminal device in any one of the second aspect or the possible designs of the second aspect. The communication apparatus may be a terminal device, for example, a handheld terminal device or a vehicle-mounted terminal device, or may be an apparatus included in the terminal device, for example, a chip, or may be an apparatus including the terminal device. The function of the foregoing terminal device may be implemented by hardware, or may be implemented by hardware by executing corresponding software. The hardware or the software includes one or more modules corresponding to the foregoing function.

In a possible design, a structure of the communication apparatus includes a processing module and a transceiver module. The processing module is configured to support the communication apparatus in performing a corresponding function in any one of the first aspect or the designs of the first aspect, or performing a corresponding function in any one of the second aspect or the designs of the second aspect. The transceiver module is configured to support communication between the communication apparatus and another communication device. For example, when the communication apparatus is the first terminal device, the transceiver module may send sidelink control information to a second terminal device, and send first data to the second terminal device on a first time-frequency resource. The communication apparatus may further include a storage module. The storage module is coupled to the processing module, and stores program instructions and data that are necessary for the communication apparatus. In an example, the processing module may be a processor, a communication module may be a transceiver, and the storage module may be a memory. The memory may be integrated with the processor, or may be disposed separately from the processor. This is not limited in this application.

In another possible design, a structure of the communication apparatus includes a processor, and may further include a memory. The processor is coupled to the memory, and may be configured to execute computer program instructions stored in the memory, so that the communication apparatus performs the method in any one of the first aspect or the possible designs of the first aspect or the method in any one of the second aspect or the possible designs of the second aspect. Optionally, the communication apparatus further includes a communication interface, and the processor is coupled to the communication interface. When the communication apparatus is a terminal device, the communication interface may be a transceiver or an input/output interface. When the communication apparatus is a chip included in the terminal device, the communication interface may be an input/output interface of the chip. Optionally, the transceiver may be a transceiver circuit, and the input/output interface may be an input/output circuit.

According to a fourth aspect, an embodiment of this application provides a chip system, including a processor, where the processor is coupled to a memory. The memory is configured to store a program or instructions. When the program or the instructions are executed by the processor, the chip system is enabled to implement the method in any possible design of the first aspect or the method in any possible design of the second aspect.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a fifth aspect, an embodiment of this application provides a computer-readable storage medium, where the computer storage medium stores computer-readable instructions. When a computer reads and executes the computer-readable instructions, the computer is enabled to perform the method in any possible design of the first aspect or the method in any possible design of the second aspect.

According to a sixth aspect, an embodiment of this application provides a computer program product. When a computer reads and executes the computer program product, the computer is enabled to perform the method in any possible design of the first aspect or the method in any possible design of the second aspect.

According to a seventh aspect, an embodiment of this application provides a communication system. The communication system includes the first terminal device and the second terminal device described above. Optionally, the communication system may further include a network device.

## BRIEF DESCRIPTION OF DRAWINGS

FIG. 1 is a schematic diagram of an application scenario of a V2X technology;
FIG. 2 is a schematic diagram of a network architecture of a communication system to which an embodiment of this application is applicable;
FIG. 3 is a schematic flowchart of a data transmission method according to an embodiment of this application;
FIG. 4 is a schematic diagram of a first time-frequency resource in Example 1 according to an embodiment of this application;
FIG. 5 is a schematic diagram of a first time-frequency resource in Example 2 according to an embodiment of this application;
FIG. 6a and FIG. 6b are schematic diagrams of a first time-frequency resource in Example 3 according to an embodiment of this application;
FIG. 7 is a schematic diagram of a structure of a communication apparatus according to an embodiment of this application; and
FIG. 8 is a schematic diagram of another structure of a communication apparatus according to an embodiment of this application.

## DETAILED DESCRIPTION OF EMBODIMENTS

To make objectives, technical solutions, and advantages of embodiments of this application clearer, the following further describes the embodiments of this application in detail with reference to the accompanying drawings.

The technical solutions of the embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system, or is applied to a future communication system or another similar communication system.

In addition, the technical solutions provided in the embodiments of this application may be applied to a cellular link, or may be applied to a link between devices, for example, a device-to-device (device-to-device, D2D) link. The D2D link or a V2X link may also be referred to as a sidelink, a secondary link, a sidelink, or the like. In the embodiments of this application, the foregoing terms all refer to links established between devices of a same type, and have a same meaning. The link established between devices of a same type may be a link between terminal devices, a link between base stations, a link between relay nodes, or the like. This is not limited in the embodiments of this application. The link between the terminal devices may be a D2D link defined in 3GPP Release (Rel)-12/13 or a V2X link, defined by 3GPP for an internet of vehicles, between vehicles, a vehicle and a mobile phone, or a vehicle and any entity. The V2X link includes a V2X link in Rel-14/15, and further includes, for example, a V2X link based on an NR system in Rel-16 and subsequent releases which are currently being researched by 3GPP.

FIG. 2 is a schematic diagram of a network architecture of a communication system to which an embodiment of this application is applicable. The communication system includes a terminal device 210 and a terminal device 220. Direct communication may be performed between terminal devices through a PC5 interface, and a direct communication link between the terminal devices is a sidelink. Sidelink-based communication may use at least one of the following channels: a physical sidelink shared channel (physical sidelink shared channel, PSSCH), used to carry data (data); a physical sidelink control channel (physical sidelink control channel, PSCCH), used to carry sidelink control information (sidelink control information, SCI).

Optionally, the communication system further includes a network device 230, configured to provide timing synchronization and resource scheduling for the terminal device. The network device may communicate with at least one terminal device (for example, the terminal device 210) through a Uu interface. A communication link between the network device and the terminal device includes an uplink (uplink, UL) and a downlink (downlink, DL). Indirect communication may be further implemented between the terminal devices through forwarding performed by the network device. For example, the terminal device 210 may send data to the network device 230 through the Uu interface. After the network device 230 sends the data to an application server 240 for processing, the application server 240 delivers the processed data to the network device 230, and the network device 230 sends the processed data to the terminal device 220. In a Uu interface-based communication manner, a network device 230 for forwarding uplink data from the terminal device 210 to the application server 240 and a network device 230 for forwarding downlink data delivered by the application server 240 to the terminal device 220 may be a same network device, or may be different network devices, and may be determined by an application server.

Based on the foregoing two communication manners, the terminal device 210 may send some information of the terminal device 210 to the terminal device 220 or another nearby terminal device. The information may include information that needs to be periodically sent, for example, a position, a speed, and an intention, and information that is triggered to be sent by some aperiodic events. In addition, the terminal device 210 may further receive information about another nearby vehicle user in real time.

The network device in FIG. 2 may be an access network device, for example, a base station. The access network device corresponds to different devices in different systems. For example, the access network device may correspond to an eNB in a fourth generation mobile communication technology (4th generation, 4G) system, and correspond to a 5G access network device, for example, a gNB, in a 5G system. Although only the terminal device 210 and the terminal device 220 are shown in FIG. 2, it should be understood that the network device may provide services for a plurality of terminal devices, and a quantity of terminal devices in the communication system is not limited in this embodiment of this application. Likewise, that the terminal device in FIG. 2 is a vehicle-mounted terminal device or a vehicle is used as an example for description. It should also be understood that the terminal device in this embodiment of this application is not limited thereto. It should be understood that this embodiment of this application is not limited to being applicable to a 4G or 5G system, and is further applicable to a subsequent evolved communication system.

The following describes some terms in the embodiments of this application, to facilitate understanding of a person skilled in the art.

(1) Terminal device: The terminal device may also be referred to as user equipment (user equipment, UE), a mobile station (mobile station, MS), a mobile terminal (mobile terminal, MT), or the like, and is a device that provides voice and/or data connectivity for a user. The terminal device may communicate with a core network through a radio access network (radio access network, RAN), and exchange a voice and/or data with the RAN. For example, the terminal device may be a handheld device, a vehicle-mounted device, vehicle user equipment, or the like that has a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). The terminal device in the embodiments of this application may alternatively be a vehicle-mounted module, a vehicle-mounted module, a vehicle-mounted component, a vehicle-mounted chip, or a vehicle-mounted unit that is built in a vehicle as one or more components or units. The vehicle uses the vehicle-mounted module, the vehicle-mounted module, the vehicle-mounted component, the vehicle-mounted chip, or the vehicle-mounted unit that is built in the vehicle, to implement the method in this application.

(2) Network device: The network device is a device that is in a network and that is configured to connect a terminal device to a wireless network. The network device may be a node in a radio access network, and may also be referred to as a base station, or may be referred to as a radio access network (radio access network, RAN) node (or device). The network device may be configured to: mutually convert a received over-the-air frame and an internet protocol (IP) packet, and serve as a router between the terminal device and a rest part of the access network. The rest part of the access network may include an IP network. The network device may further coordinate attribute management of an air interface. For example, the network device may include a long term evolution (long term evolution, LTE) system or an evolved NodeB (NodeB, eNB, or e-NodeB, evolved NodeB) in an evolved LTE system (LTE-Advanced, LTE-A), for example, a conventional macro base station eNB and a micro base station eNB in a heterogeneous network scenario; or may include a next generation NodeB (next generation NodeB, gNB) in a 5th generation (5th generation, 5G) new radio (new radio, NR) system; or may further include a transmission reception point (transmission reception point, TRP), a home base station (for example, a home evolved NodeB, or a home NodeB, HNB), a baseband unit (baseband unit, BBU), a baseband pool BBU pool, a Wi-Fi access point (access point, AP), or the like; or may include a centralized unit (centralized unit, CU) and a distributed unit (distributed unit, DU) in a cloud access network (cloud radio access network, CloudRAN) system. This is not limited in the embodiments of this application. For another example, a network device in a V2X technology is a road side unit (road side unit, RSU). The RSU may be a fixed infrastructure entity supporting a V2X application, and may exchange a message with another entity supporting the V2X application.

(3) The terms "system" and "network" may be used interchangeably in the embodiments of this application. "A plurality of" means two or more. In view of this, "a plurality of" may also be understood as "at least two" in the embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" is an association relationship for describing associated objects and indicates that three relationships may exist. For example, A and/or B may indicate the following three cases: Only A exists, both A and B exist, and only B exists. In addition, unless otherwise stated, the character "/" generally indicates an "or" relationship between the associated objects.

Unless otherwise stated, ordinal numbers such as "first" and "second" in the embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

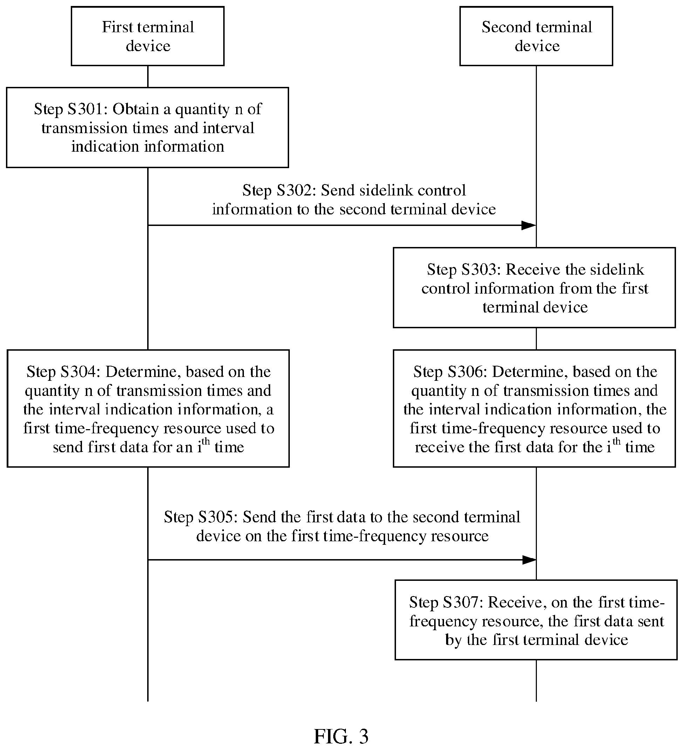

FIG. 3 is a schematic flowchart of a data transmission method according to an embodiment of this application. The method includes the following step S301 to step S307.

Step S301: A first terminal device obtains a quantity n of transmission times and interval indication information.

The first terminal device mentioned in this embodiment of this application is a sender of first data, and a second terminal device is a receiver of the first data. The quantity n of transmission times is a quantity of transmission times of the first data, where n is a positive integer greater than or equal to 2. This embodiment of this application is applicable to a blind retransmission or a hybrid automatic repeat request (hybrid automatic repeat request, HARQ) transmission mode. In the blind retransmission transmission mode, the quantity n of transmission times indicates that the first terminal device continuously sends the first data for n times regardless of whether the second terminal device successfully receives the first data in a previous transmission process. In this way, that n is greater than or equal to 2 may indicate that the first data is transmitted for at least two times, including one time of initial transmission and at least one time of retransmission. In the HARQ transmission mode, the quantity n of transmission times indicates a maximum quantity of transmission times of the first data, and an actual quantity of transmission times of the first data may be less than or equal to the maximum quantity of transmission times. A network device or the first terminal device may preconfigure time-frequency resources used when the first data is transmitted for the n times. However, the first terminal device sends the first data again only when the first data fails to be received by the second terminal device in a previous time of transmission, for example, when the first terminal device receives a NACK sent by the second terminal device.

The interval indication information is used to indicate a time domain interval, a frequency domain interval, or a time domain interval and a frequency domain interval. It may be understood that the interval indication information may indicate only the time domain interval, only the frequency domain interval, or both the time domain interval and the frequency domain interval. This is not limited in this application.

The time domain interval is a time domain interval between a time domain resource used when the first data is sent for an $i^{th}$ time and a time domain resource used when the first data is sent for an $(i-1)^{th}$ time, that is, an interval between time domain positions of two adjacent times of transmission of the first data. A unit of the time domain interval may be a time unit, and each time unit may be a slot or a symbol.

The frequency domain interval is a frequency domain interval between a frequency domain resource used when the first data is sent for the $i^{th}$ time and a frequency domain resource used when the first data is sent for the $(i-1)^{th}$ time, that is, an interval between frequency domain resources of two adjacent times of transmission of the first data. A unit of the frequency domain interval may be a subchannel or a resource block (resource block, RB). One subchannel may include one or more resource blocks, for example, two RBs or four RBs, and a quantity of resource blocks may be specifically configured by the network device. This is not limited in this application. i is a positive integer greater than or equal to 1 and less than or equal to n, and indicates a sequence number of the current transmission of the first data.

In this embodiment of this application, the first terminal device may obtain the quantity n of transmission times and the interval indication information in a plurality of possible implementations. For example, in a possible design, the quantity n of transmission times and the interval indication information may be configured by the network device and sent to the first terminal device by using first indication information. In this way, the first terminal device may receive the first indication information from the network device, and obtain, from the first indication information, the quantity n of transmission times and the interval indication information that are indicated by the network device. The first indication information may be physical layer configuration signaling, medium access control (medium access control, MAC) layer control signaling, radio resource control (radio resource control, RRC) control signaling, or downlink control information (downlink control information, DCI), which is not limited in this application. In another possible design, the quantity n of transmission times and the interval indication information may be determined by the first terminal device. For example, the first terminal device may determine the quantity n of transmission times and the interval indication information based on a quality of service (quality of service, QoS) requirement corresponding to the first data.

It should be further understood that the time domain interval and the frequency domain interval indicated in the interval indication information may be two fields in the first indication information. When the interval indication information indicates both the time domain interval and the frequency domain interval, the time domain interval and the frequency domain interval may be two independent fields, or may be two fields having an association relationship. This is not limited in this application.

Step S302: The first terminal device sends sidelink control information to the second terminal device.

The sidelink control information may be sidelink control information (sidelink control information, SCI). Each time before sending the first data to the second terminal device, the first terminal device may send the SCI to the second terminal device, where the SCI is used to indicate the quantity n of transmission times, the interval indication information, and i, i indicates the sequence number of the current transmission of the first data, and i is greater than or equal to 1 and less than or equal to n.

Step S303: The second terminal device receives the sidelink control information from the first terminal device.

The second terminal device may receive the SCI sent by the first terminal device, and determine the quantity n of transmission times, the interval indication information, and a value of i based on the SCI. It can be learned that the SCI sent by the first terminal device may be used to indicate whether the first terminal device retransmits the first data. When n is equal to 1, it indicates that the first data is transmitted only once, and no retransmission is performed. When n is greater than or equal to 2, it indicates that retransmission is performed.

Step S304: The first terminal device determines, based on the quantity n of transmission times and the interval indication information, a first time-frequency resource used to send the first data for the $i^{th}$ time.

In this embodiment of this application, the first time-frequency resource may include a time domain part and a frequency domain part. If only the time domain interval is indicated in the interval indication information, the first terminal device may determine a time domain start position of the first time-frequency resource according to the following formula 1, and further determine the first time-frequency resource based on the time domain start position:

$$\left(t_n^{SL} + (i-1) \times SF_{time-gap}\right)\%T_{max}^{SL} \quad \text{Formula 1}$$

$t_n^{SL}$ is a time domain start position for sending the first data for the first time, $SF_{time\text{-}gap}$ is the time domain interval, and $T_{max}^{SL}$ is a maximum length of a time domain resource pool. In this case, a frequency domain start position or a frequency domain resource of the first time-frequency resource may be the same as that for sending the first data for the first time.

If only the frequency domain interval is indicated in the interval indication information, the first terminal device may determine a frequency domain start position of the first time-frequency resource according to the following formula 2, and further determine the first time-frequency resource based on the frequency domain start position:

$$(m + (i - 1) \times SF_{frequency\text{-}gap})\%N_{subCH} \quad \text{Formula 2}$$

m is a frequency domain start position for sending the first data for the first time, $SF_{frequency\text{-}gap}$ is the frequency domain interval, and $N_{subCH}$ is a width of a frequency domain resource pool. In this case, a time domain start position or a time domain resource of the first time-frequency resource may be the same as that for sending the first data for the first time.

If both the time domain interval and the frequency domain interval are indicated in the interval indication information, the first terminal device may respectively determine a time domain start position and a frequency domain start position of the first time-frequency resource according to the foregoing formula 1 and formula 2, and further determine the first time-frequency resource based on the time domain start position and the frequency domain start position.

In this embodiment of this application, the frequency domain interval may have a specific association relationship with the time domain interval. For example, the frequency domain interval satisfies a relationship shown in the following formula 3.

$$SF_{frequency\text{-}gap} = SF_{time\text{-}gap}/K \text{ or } SF_{frequency\text{-}gap} = SF_{time\text{-}gap} \times K \qquad \text{Formula 3}$$

K is an integer greater than or equal to 1. It can be learned from the formula 3 that the time domain interval may be an integer multiple of the frequency domain interval, or the frequency domain interval may be an integer multiple of the time domain interval.

In this way, when only the time domain interval is indicated in the interval indication information, the first terminal device may also determine the frequency domain interval according to the formula 3 and based on the time domain interval indicated in the interval indication information, then determine the frequency domain start position of the first time-frequency resource according to the method shown in the formula 2, and further determine the first time-frequency resource based on the determined time domain start position and the determined frequency domain start position. It may be understood that the frequency domain interval may be indirectly indicated by the time domain interval in the interval indication information.

When only the frequency domain interval is indicated in the interval indication information, the first terminal device may also determine the time domain interval according to the formula 3 and based on the frequency domain interval indicated in the interval indication information, then determine the time domain start position of the first time-frequency resource according to the method shown in the formula 1, and further determine the first time-frequency resource based on the determined time domain start position and the determined frequency domain start position. It may also be understood that the time domain interval may be indirectly indicated by the frequency domain interval in the interval indication information.

It should be understood that the relationship shown in the formula 3 is merely an example. The frequency domain interval and the time domain interval in this embodiment of this application may also satisfy another association relationship, provided that an association relationship between the time domain interval and the frequency domain interval is set and one interval can be derived or converted from the other interval. This is not limited in this application.

In this embodiment of this application, the first terminal device may alternatively determine the frequency domain start position of the first time-frequency resource in another manner. For example, the first terminal device may determine the frequency domain start position of the first time-frequency resource according to the following formula 4 and based on a configuration parameter of a related resource, and further determine the first time-frequency resource based on the frequency domain start position:

$$(m + (i - 1) \times ((N_{subCH} - L_{subCH} + 1)/n))\%N_{subCH} \quad \text{Formula 4}$$

m is a frequency domain start position for sending the first data for the first time, $N_{subCH}$ is a width of a frequency domain resource pool, $L_{subCH}$ is a frequency domain width occupied by the first data, n is a quantity of transmission times, $N_{subCH}$ and $L_{subCH}$ may be represented by a quantity of included subchannels, or may be represented by a quantity of included RBs. For example, $N_{subCH}$ may be a maximum quantity of subchannels in the frequency domain resource pool.

It may be understood that the first terminal device may also use a combination of the method for determining the time domain start position shown in the formula 1 and the method for determining the frequency domain start position shown in the formula 4, to finally determine the first time-frequency resource. This is not limited in this application. It should be further understood that the first time-frequency resource mentioned in this embodiment of this application may be scheduled by the network device, or may be determined by the first terminal device from a preconfigured resource pool or a grant resource. This is not specifically limited.

Step S305: The first terminal device sends the first data to the second terminal device on the first time-frequency resource.

Step S306: The second terminal device determines, based on the quantity n of transmission times and the interval indication information, the first time-frequency resource used to receive the first data for the ith time.

It should be noted that the second terminal device may determine the first time-frequency resource in a same manner as the first terminal device. Details are not described herein again.

Step S307: The second terminal device receives, on the first time-frequency resource, the first data sent by the first terminal device.

It can be learned that, according to the technical solutions provided in this embodiment of this application, the first terminal device and the second terminal device may determine, based on the quantity n of transmission times indicated in the sidelink control information and the time domain interval, the frequency domain interval, or the time domain interval and the frequency domain interval indicated in the interval indication information, the time-frequency resource used when the first data is transmitted for the ith time. In this way, different time-frequency resources may be used in different transmission processes of the first data, so that a time diversity gain and a frequency diversity gain can be fully utilized, and data transmission reliability can be effectively improved. In addition, the quantity n of transmission times in this embodiment of this application is greater than or equal to 3, indicating that a plurality of times of retransmission of the first data may be supported. This can be applied to a more complex data transmission scenario.

The following describes the data transmission method provided in the embodiments of this application by using several specific examples.

Example 1:

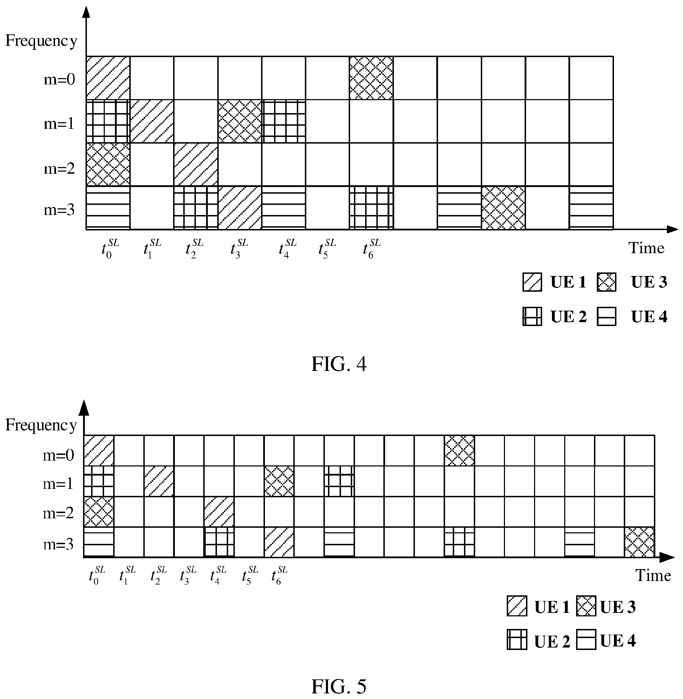

In FIG. 4, different shadow patterns correspond to different UEs, a horizontal axis represents time, and a vertical axis represents a frequency. Interval indication information indicates both a time domain interval and a frequency domain interval, and values of time domain intervals $SF_{time\text{-}gap}$ of UE 1, UE 2, UE 3, and UE 4 are 1, 2, 3, and 4, respectively. In addition, a time domain interval and a frequency domain interval of each UE are the same.

The UE 2 (represented by a grid shadow) is used as an example. It is assumed that $T_{max}^{SL} = 1000$, $N_{subCH} = 4$, a quantity n of transmission times is equal to 5. In this case, a time domain position of initial transmission is a moment $t_0^{SL}$, a time domain position of the first time of retransmission (that is, the second time of transmission) is $\left(t_0^{SL} + (2-1) \times SF_{time-gap}\right)\%T_{max}^{SL} = t_2^{SL}$, a time domain position of the second time of retransmission (that is, the third time of transmission) is $\left(t_0^{SL} + (3-1) \times SF_{time-gap}\right)\%T_{max}^{SL} = t_4^{SL}$, and a time domain position of the third time of retransmission (that is, the fourth time of transmission) is $\left(t_0^{SL} + (4-1) \times SF_{time-gap}\right)\%T_{max}^{SL} = t_6^{SL}$.

Similarly, a start position of a frequency subchannel of the initial transmission is m = 1, a start position of a frequency subchannel of the first time of retransmission (that is, the second time of transmission) is (m + (2 - 1) $\times$ $SF_{frequency-gap})\%N_{subCH}$ = 3, a start position of a frequency subchannel of the second time of retransmission (that is, the third time of transmission) is (m + (3 - 1) $\times$ $SF_{frequency-gap})\%N_{subCH}$ = 1, and a start position of a frequency subchannel of the third time of retransmission (that is, the fourth time of transmission) is (m + (4 - 1) $\times$ $SF_{frequency-gap})\%N_{subCH}$ = 3.

Example 2:

In FIG. 5, different shadow patterns correspond to different UEs, a horizontal axis represents time, and a vertical axis represents a frequency. Interval indication information indicates only a time domain interval, but a frequency domain interval and a time domain interval of UE satisfy a relationship that $SF_{frequency-gap} = SF_{time-gap}/K$, K = 2. Values of time domain intervals $SF_{time-gap}$ of UE 1, UE 2, UE 3, and UE 4 are 2, 4, 6, and 8, respectively.

The UE 2 (represented by a grid shadow) is used as an example. It is assumed that $T_{max}^{SL} = 1000$, $N_{subCH} = 4$, and a quantity n of transmission times is equal to 5. In this case, a time domain position of initial transmission is a moment

$t_0^{SL}$ , a time domain position of the first time of retransmission (that is, the second time of transmission) is $\left(t_0^{SL} + (2-1) \times SF_{time-gap}\right)\%T_{max}^{SL} = t_4^{SL}$ , a time domain position of the second time of retransmission (that is, the third time of transmission) is $\left(t_0^{SL} + (3-1) \times SF_{time-gap}\right)\%T_{max}^{SL} = t_8^{SL}$ , and a time domain position of the third time of retransmission (that is, the fourth time of transmission) is $\left(t_0^{SL} + (4-1) \times SF_{time-gap}\right)\%T_{max}^{SL} = t_{12}^{SL}$ .

Similarly, a start position of a frequency subchannel of the initial transmission is m = 1, a start position of a frequency subchannel of the first time of retransmission (that is, the second time of transmission) is (m + (2 - 1) × $SF_{time-gap}$/2)%$N_{supCH}$ = 3, a start position of a frequency subchannel of the second time of retransmission (that is, the third time of transmission) is (m + (3 - 1) × $SF_{time-gap}$/2)%$N_{subCH}$ = 1, and a start position of a frequency subchannel of the third time of retransmission (that is, the fourth time of transmission) is (m + (4 - 1) × $SF_{time-gap}$/2)%$N_{subCH}$ = 3.

Example 3

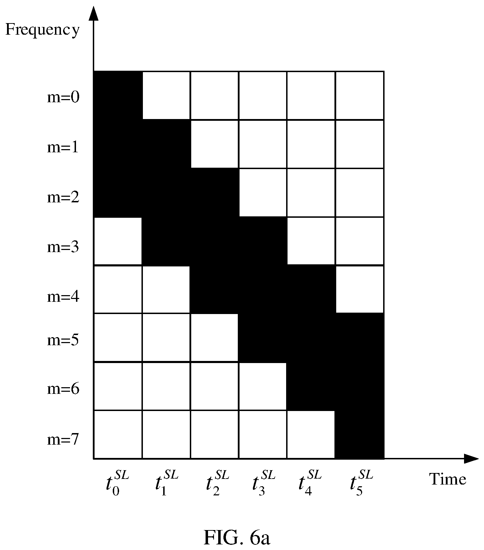

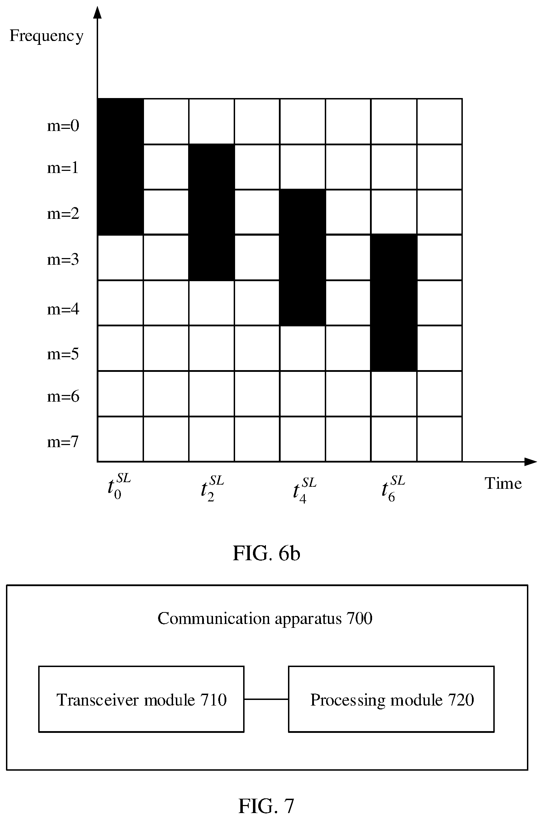

In FIG. 6a and FIG. 6b, a horizontal axis represents time, and a vertical axis represents a frequency. Interval indication information indicates only a time domain interval. UE determines a time domain start position according to the method shown in the formula 1, and determines a frequency domain start position according to the method shown in the formula 4.

Assuming that a maximum quantity of subchannels in a frequency domain resource pool is $N_{subCH}$ = 8, a width occupied by data of the UE is $L_{subCH}$ = 3, and $L_{subCH}$ may be a quantity of subchannels actually occupied by a PSCCH and a PSSCH, a quantity of available frequency resource blocks is $N_{subCH}$ - $L_{subCH}$ + 1 = 6. The six frequency resource blocks indicate that the data of the UE may be sent in frequency domain in six manners, that is, six frequency domain resource positions are available. In FIG. 6a, six available frequency resource blocks respectively correspond to a moment $t_0^{SL}$ to a moment $t_5^{SL}$ . However, it should be understood that the frequency resource blocks in FIG. 6a are merely examples and do not need to correspond to different time units. FIG. 6a is merely intended to visually show the six available frequency domain resource positions.

It is assumed that a start position of a frequency resource subchannel of initial transmission is m. To maximize utilization of a frequency diversity gain, a start position of a frequency subchannel of retransmission is determined according to the method in the formula 4. As shown in FIG. 6b, it is assumed that, for a UE, a time domain interval is $SF_{time-gap}$ = 2, $T_{max}^{SL} = 1000$, $N_{subCH}$ = 8, $L_{subCH}$ = 3, a quantity n of transmission times is equal to 5, and a maximum quantity of

retransmission times is $R_{max}$ = 4. A time domain position of initial transmission is a moment $t_0^{SL}$ , a time domain position of the first time of retransmission (that is, the second time of transmission) is $\left(t_0^{SL} + (2-1) \times SF_{time-gap}\right)\%T_{max}^{SL} = t_2^{SL}$ ,

a time domain position of the second time of retransmission (that is, the third time of transmission) is $\left(t_0^{SL} + (3-1) \times SF_{time-gap}\right)\%T_{max}^{SL} = t_4^{SL}$ , and a time domain position of the third time of retransmission (that is, the fourth time of transmission) is $\left(t_0^{SL} + (4-1) \times SF_{time-gap}\right)\%T_{max}^{SL} = t_6^{SL}$ .

Similarly, a start position of a frequency subchannel of the initial transmission is m = 0, a start position of a frequency subchannel of the first time of retransmission (that is, the second time of transmission) is (m + (2 - 1) × (($N_{subCH}$ - $L_{subCH}$ + 1)/$R_{max}$))%$N_{subCH}$ = 1, a start position of a frequency subchannel of the second time of retransmission (that is, the third time of transmission) is (m + (3 - 1) × (($N_{subCH}$ - $L_{subCH}$ + 1)/$R_{max}$))%$N_{subCH}$ = 2, and a start position of a frequency subchannel of the third time of retransmission (that is, the fourth time of transmission) is (m + (4 - 1) × (($N_{subCH}$ - $L_{subCH}$ + 1)/$R_{max}$))%$N_{subCH}$ = 3.

An embodiment of this application provides a communication apparatus. FIG. 7 is a schematic diagram of a structure of a communication apparatus according to this embodiment of this application. The communication apparatus 700 includes a transceiver module 710 and a processing module 720. The communication apparatus may be configured to implement a function of the first terminal device or the second terminal device in any one of the foregoing method embodiments. For example, the communication apparatus may be a terminal device, for example, a handheld terminal device or a vehicle-mounted terminal device. Alternatively, the communication apparatus may be a chip included in the terminal device, or an apparatus including the terminal device, for example, various types of vehicles.

When the communication apparatus is the first terminal device and performs the method embodiment shown in FIG. 3, the transceiver module 710 is configured to: send sidelink control information to a second terminal device, and send first data to the second terminal device on a determined first time-frequency resource; the processing module 720 is configured to: obtain a quantity of transmission times and interval indication information, and determine, based on the quantity of transmission times and the interval indication information, the first time-frequency resource used to send the first data for an $i^{th}$ time.

When the communication apparatus is the second terminal device and performs the method embodiment shown in FIG. 3, the transceiver module 710 is configured to: receive sidelink control information from a first terminal device, and receive, on a first time-frequency resource, first data sent by the first terminal device; the processing module 720 is configured to determine, based on a quantity n of transmission times and interval indication information, the first time-frequency resource used for receiving the first data for an $i^{th}$ time.

The processing module 720 in the communication apparatus may be implemented by a processor or a processor-related circuit component, and the transceiver module 710 may be implemented by a transceiver or a transceiver-related circuit component. Operations and/or functions of the modules in the communication apparatus are respectively used to implement corresponding procedures of the methods shown in FIG. 3, FIG. 4, FIG. 5, FIG. 6a, and FIG. 6b. For brevity, details are not described herein again.

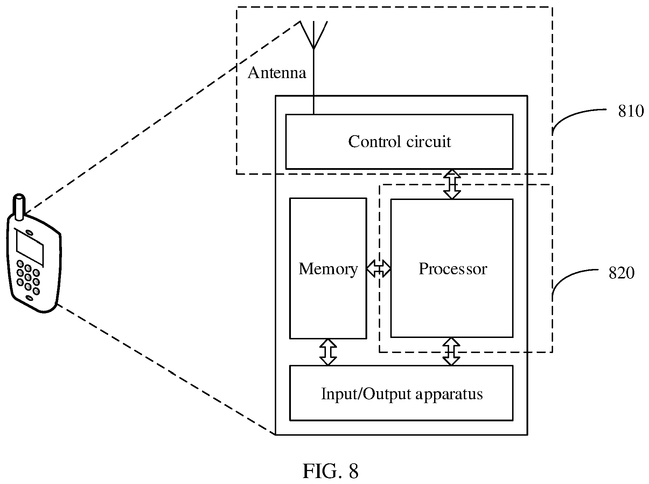

FIG. 8 is a schematic diagram of another structure of a communication apparatus according to an embodiment of this application. The communication apparatus may be specifically a terminal device. For ease of understanding and illustration, in FIG. 8, a mobile phone is used as an example of the terminal device. As shown in FIG. 8, the terminal device includes a processor, and may further include a memory. In addition, the terminal device may further include a radio frequency circuit, an antenna, an input/output apparatus, and the like. The processor is mainly configured to: process a communication protocol and communication data, control the terminal device, execute a software program, process data of the software program, or the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that some types of terminal devices may not have an input/output apparatus.

When needing to send data, after performing baseband processing on the to-be-sent data, the processor outputs a baseband signal to the radio frequency circuit. The radio frequency circuit performs radio frequency processing on the baseband signal and then sends the radio frequency signal to outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 8 shows only one memory and only one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 8, the terminal device includes a transceiver unit 810 and a processing unit 820. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit 810 includes the receiving unit and the sending unit. The transceiver unit sometimes may also be referred to as a transceiver machine, a transceiver, a transceiver circuit, or the like. The receiving unit sometimes may also be referred to as a receiving machine, a receiver, a receiving circuit, or the like. The sending unit sometimes may also be referred to as a transmitter machine, a transmitter, a transmitter circuit, or the like. It should be understood that the transceiver unit 810 is configured to perform a sending operation and a receiving operation on a terminal device side in the foregoing method embodiments, and the processing unit 820 is configured to perform an operation other than the receiving and sending operations of the terminal device in the foregoing method embodiments.

An embodiment of this application further provides a chip system, including a processor. The processor is coupled to a memory. The memory is configured to store a program or instructions, and when the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

It should be understood that steps in the foregoing method embodiments may be implemented by using a hardware integrated logical circuit in the processor or instructions in a form of software. The steps of the method disclosed with reference to the embodiments of this application may be directly performed and completed by a hardware processor, or may be performed and completed by using a combination of hardware in the processor and a software module.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a network device and at least one terminal device.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) is integrated into the processor.

It should be noted that the memory described in this specification is intended to include, but is not limited to, these memories and any other appropriate types of memories.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of the present invention.

A person of ordinary skill in the art may be aware that, in combination with units and algorithm steps of the examples described in the embodiments disclosed in this specification, this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods according to the embodiments of this application. The foregoing storage medium includes various media that can store program code, for example, a USB flash drive, a removable hard disk, a read-only memory (Read-Only Memory, ROM), a random access memory (Random Access Memory, RAM), a magnetic disk, and an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:

   obtaining (S301), by a first terminal device, a quantity n of transmission times and interval indication information, wherein the quantity n of transmission times is a quantity of transmission times of first data, wherein the interval indication information is used to indicate a time domain interval, a frequency domain interval, or a time domain interval and a frequency domain interval, the time domain interval is used to indicate a time domain interval between a time domain resource for sending the first data for an $i^{th}$ time and a time domain resource for sending the first data for an $(i-1)^{th}$ time, and the frequency domain interval is used to indicate a frequency domain interval between a frequency domain resource for sending the first data for the $i^{th}$ time and a frequency domain resource for sending the first data for the $(i-1)^{th}$ time, wherein i is used to indicate that first data is transmitted for an $i^{th}$ time and $1 \leq i \leq n$, and n is a positive integer greater than or equal to 2;
   sending (S302), by the first terminal device, sidelink control information to a second terminal device, wherein the sidelink control information is used to indicate the quantity n of transmission times, the interval indication information, and i;
   determining (S304), by the first terminal device based on the quantity n of transmission times and the interval indication information, a first time-frequency resource used to send the first data for the $i^{th}$ time; and
   sending (S305), by the first terminal device, the first data to the second terminal device on the first time-frequency resource,
   wherein the determining (S304), by the first terminal device, a first time-frequency resource used to send the first data for the $i^{th}$ time comprises: determining, by the first terminal device, a time domain start position for sending the first data for the $i^{th}$ time and a frequency domain start position for sending the first data for the $i^{th}$ time; and determining, by the first terminal device, the first time-frequency resource based on the time domain start position and the frequency domain start position.

2. The method according to claim 1, wherein the obtaining (S301), by a first terminal device, a quantity n of transmission times and interval indication information comprises:

   receiving, by the first terminal device, first indication information from a network device, wherein the first indication information is used to indicate the quantity n of transmission times and the interval indication information; or
   determining, by the first terminal device, the quantity n of transmission times and the interval indication information based on quality of service QoS corresponding to the first data.

3. The method according to claim 1 or 2, wherein the time domain start position satisfies:

$$\left(t_n^{SL} + (i-1) \times SF_{time-gap}\right)\%T_{max}^{SL},$$

wherein

$t_n^{SL}$ is a time domain start position for sending the first data for the first time, $SF_{time-gap}$ is the time domain interval, and $T_{max}^{SL}$ is a maximum length of a time domain resource pool.

4. The method according to any one of claims 1 to 3, wherein the frequency domain start position satisfies:

$$\left(m + (i-1) \times SF_{frequency-gap}\right)\%N_{subCH},$$

wherein

m is a frequency domain start position for sending the first data for the first time, $SF_{frequency-gap}$ is the frequency domain interval, and $N_{subCH}$ is a width of a frequency domain resource pool.

5. The method according to claim 4, wherein the frequency domain interval satisfies:

$$SF_{frequency-gap} = SF_{time-gap}/K \text{ or } SF_{frequency-gap} = SF_{time-gap} \times K,$$

wherein

$K$ is an integer greater than or equal to 1.

6. The method according to any one of claims 1 to 3, wherein the frequency domain start position satisfies:

$$\left(m + (i-1) \times ((N_{subCH} - L_{subCH} + 1)/n)\right)\%N_{subCH},$$

wherein

m is a frequency domain start position for sending the first data for the first time, $N_{subCH}$ is a width of a frequency domain resource pool, and $L_{subCH}$ is a frequency domain width occupied by the first data.

7. A data transmission method, wherein the method comprises:

receiving (S303), by a second terminal device, sidelink control information from a first terminal device, wherein the sidelink control information is used to indicate a quantity n of transmission times, interval indication information, and i, wherein the quantity n of transmission times is a quantity of transmission times of first data, i is used to indicate that first data is transmitted for an $i^{th}$ time, the interval indication information is used to indicate a time domain interval, a frequency domain interval, or a time domain interval and a frequency domain interval, the time domain interval is used to indicate a time domain interval between a time domain resource for sending the first data for the $i^{th}$ time and a time domain resource for sending the first data for an $(i-1)^{th}$ time, and the frequency domain interval is used to indicate a frequency domain interval between a frequency domain resource for sending the first data for the $i^{th}$ time and a frequency domain resource for sending the first data for the $(i-1)^{th}$ time, wherein $1 \leq i \leq n$, and n is a positive integer greater than or equal to 2; determining (S306), by the second terminal device based on the quantity n of transmission times and the interval indication information, a first time-frequency resource used to receive the first data for the $i^{th}$ time; and receiving (S307), by the second terminal device on the first time-frequency resource, the first data sent by the first terminal device, wherein the determining (S306), by the second terminal device based on the quantity n of transmission times and the interval indication information, a first time-frequency resource used to receive the first data for the $i^{th}$ time comprises: determining, by the second terminal device, a time domain start position for receiving the first data for the $i^{th}$ time and a frequency domain start position for receiving the first data for the $i^{th}$ time; and determining, by the second terminal device, the first time-frequency resource based on the time domain start position and the frequency domain start position.

8. The method according to claim 7, wherein the time domain start position satisfies:

$$\left(t_n^{SL} + (i-1) \times SF_{time-gap}\right)\%T_{max}^{SL},$$

wherein

$t_n^{SL}$ is a time domain start position when the first terminal device sends the first data for the first time, $SF_{time\text{-}gap}$ is the time domain interval, and $T_{max}^{SL}$ is a maximum length of a time domain resource pool.

9. The method according to claim 7 or 8, wherein the frequency domain start position satisfies:

$$\left(m + (i-1) \times SF_{frequency-gap}\right)\%N_{subCH},$$

wherein

m is a frequency domain start position when the first terminal device sends the first data for the first time, $SF_{frequency\text{-}gap}$ is the frequency domain interval, and $N_{subCH}$ is a width of a frequency domain resource pool.

10. The method according to claim 9, wherein the frequency domain interval satisfies:

$$SF_{frequency-gap} = SF_{time-gap}/K \text{ or } SF_{frequency-gap} = SF_{time-gap} \times K,$$

wherein

$K$ is an integer greater than or equal to 1.

11. The method according to claim 7 or 8, wherein the frequency domain start position satisfies:

$$\left(m + (i-1) \times ((N_{subCH} - L_{subCH} + 1)/n)\right)\%N_{subCH},$$

wherein

m is a frequency domain start position when the first terminal device sends the first data for the first time, $N_{subCH}$ is a width of a frequency domain resource pool, and $L_{subCH}$ is a frequency domain width occupied by the first data.

12. A communication apparatus (700), wherein the apparatus (700) comprises:

a processing module (720); and
a transceiver module (710),
wherein the communication apparatus (700) is configured to implement the method according to any one of claims 1-6.

13. A communication apparatus (700), wherein the apparatus (700) comprises:

a transceiver module (710); and
a processing module (720),
wherein the communication apparatus (700) is configured to implement the method according to any one of claims 7-11.

14. A computer-readable storage medium, wherein the computer-readable storage medium stores a computer program or instructions; and when a computer reads and executes the computer program or the instructions, the computer is enabled to perform the method according to any one of claims 1 to 6.

15. A computer-readable storage medium, wherein the computer-readable storage medium stores a computer program or instructions; and when a computer reads and executes the computer program or the instructions, the computer is enabled to perform the method according to any one of claims 7 to 11.

**Patentansprüche**

1. Datenübertragungsverfahren, wobei das Verfahren Folgendes umfasst:

   Erlangen (S301) einer Menge n von Übertragungszeiten und Intervallanzeigeinformationen durch eine erste Endgerätevorrichtung, wobei die Menge n von Übertragungszeiten eine Menge von Übertragungszeiten erster Daten ist, wobei die Intervallanzeigeinformationen verwendet werden, um ein Zeitbereichsintervall, ein Frequenzbereichsintervall oder ein Zeitbereichsintervall und ein Frequenzbereichsintervall anzuzeigen, das Zeitbereichsintervall verwendet wird, um ein Zeitbereichsintervall zwischen einer Zeitbereichsressource zum Senden der ersten Daten zum i-ten Mal und einer Zeitbereichsressource zum Senden der ersten Daten zum (i-1)-ten Mal anzuzeigen, und das Frequenzbereichsintervall verwendet wird, um ein Frequenzbereichsintervall zwischen einer Frequenzbereichsressource zum Senden der ersten Daten zum i-ten Mal und einer Frequenzbereichsressource zum Senden der ersten Daten zum (i-1)-ten Mal anzuzeigen, wobei i verwendet wird, um anzuzeigen, dass die ersten Daten zum i-ten Mal übertragen werden, und $1 \leq i \leq n$ und n eine positive ganze Zahl größer oder gleich 2 ist;
   Senden (S302) von Sidelink-Steuerinformationen durch die erste Endgerätevorrichtung an eine zweite Endgerätevorrichtung, wobei die Sidelink-Steuerinformationen verwendet werden, um die Menge n von Übertragungszeiten, die Intervallanzeigeinformationen und i anzuzeigen;
   Bestimmen (S304) einer ersten Zeit-Frequenz-Ressource, die verwendet wird, um die ersten Daten zum i-ten Mal zu senden, durch die erste Endgerätevorrichtung basierend auf der Menge n von Übertragungszeiten und den Intervallanzeigeinformationen;
   und
   Senden (S305) der ersten Daten durch die erste Endgerätevorrichtung an die zweite Endgeräteeinrichtung auf der ersten Zeit-Frequenz-Ressource,
   wobei das Bestimmen (S304) einer ersten Zeit-Frequenz-Ressource, die verwendet wird, um die ersten Daten zum i-ten Mal zu senden, durch die erste Endgerätevorrichtung Folgendes umfasst: Bestimmen einer Startposition im Zeitbereich zum Senden der ersten Daten zum i-ten Mal und einer Startposition im Frequenzbereich zum Senden der ersten Daten zum i-ten Mal durch die erste Endgerätevorrichtung; und Bestimmen der ersten Zeit-Frequenz-Ressource basierend auf der Startposition im Zeitbereich und der Startposition im Frequenzbereich durch die erste Endgerätevorrichtung.

2. Verfahren nach Anspruch 1, wobei das Erlangen (S301) einer Menge n von Übertragungszeiten und Intervallanzeigeinformationen durch eine erste Endgerätevorrichtung Folgendes umfasst:

   Empfangen erster Anzeigeinformationen durch die erste Endgerätevorrichtung von der Netzwerkvorrichtung, wobei die ersten Anzeigeinformationen verwendet werden, um die Menge N von Übertragungszeiten und die Intervallanzeigeinformationen anzuzeigen; oder
   Bestimmen der Menge n von Übertragungszeiten und der Intervallanzeigeinformationen durch die erste Endgerätevorrichtung basierend auf der Dienstgüte QoS entsprechend den ersten Daten.

3. Verfahren nach Anspruch 1 oder 2, wobei die Startposition im Zeitbereich Folgendes erfüllt:

$$\left(t_n^{SL} + (i - 1) \times SF_{time-gap}\right)\%T_{max}^{SL},$$

   wobei $t_n^{SL}$ eine Startposition im Zeitbereich zum erstmaligen Senden der ersten Daten ist, $SF_{time-gap}$ das Zeitbereichsintervall ist und $T_{max}^{SL}$ eine maximale Länge eines Ressourcenpools im Zeitbereich ist.

4. Verfahren nach einem der Ansprüche 1 bis 3, wobei die Startposition im Frequenzbereich Folgendes erfüllt:

$$(m + (i - 1) \times SF_{frequency-gap})\%N_{subCH},$$

   wobei
   m eine Startposition im Frequenzbereich zum erstmaligen Senden der ersten Daten ist, $SF_{frequency-gap}$ das Frequenzbereichsintervall ist und $N_{subCH}$ eine Breite eines Ressourcenpools im Frequenzbereich ist.

5. Verfahren nach Anspruch 4, wobei das Frequenzbereichsintervall Folgendes erfüllt:

$$SF_{frequency\text{-}gap} = SF_{time\text{-}gap}/K \text{ oder } SF_{frequency\text{-}gap} = SF_{time\text{-}gap} \times K,$$

wobei
K eine ganze Zahl größer oder gleich 1 ist.

6. Verfahren nach einem der Ansprüche 1 bis 3, wobei die Startposition im Frequenzbereich Folgendes erfüllt:

$$(m + (i - 1) \times ((N_{subCH} - L_{subCH} + 1)/n)) \% N_{subCH},$$

wobei
m eine Startposition im Frequenzbereich zum erstmaligen Senden der ersten Daten ist, $N_{subCH}$ eine Breite eines Ressourcenpools im Frequenzbereich ist und $L_{subCH}$ eine durch die ersten Daten belegte Frequenzbereichsbreite ist.

7. Datenübertragungsverfahren, wobei das Verfahren Folgendes umfasst:

Empfangen (S303) von Sidelink-Steuerinformationen durch eine zweite Endgerätevorrichtung von einer ersten Endgerätevorrichtung, wobei die Sidelink-Steuerinformationen verwendet werden, um eine Menge n von Übertragungszeiten, Intervallanzeigeinformationen und i anzuzeigen, wobei die Menge n von Übertragungszeiten eine Menge von Übertragungszeiten erster Daten ist, i verwendet wird, um anzuzeigen, dass erste Daten zum i-ten Mal übertragen werden, die Intervallanzeigeinformationen verwendet werden, um ein Zeitbereichsintervall, ein Frequenzbereichsintervall oder ein Zeitbereichsintervall und ein Frequenzbereichsintervall anzuzeigen, das Zeitbereichsintervall verwendet wird, um ein Zeitbereichsintervall zwischen einer Zeitbereichsressource zum Senden der ersten Daten zum i-ten Mal und einer Zeitbereichsressource zum Senden der ersten Daten zum (i-1)-ten Mal anzuzeigen, und das Frequenzbereichsintervall verwendet wird, um ein Frequenzbereichsintervall zwischen einer Frequenzbereichsressource zum Senden der ersten Daten zum i-ten Mal und einer Frequenzbereichsressource zum Senden der ersten Daten zum (i-1)-ten Mal anzuzeigen, wobei $1 \leq i \leq n$ und n eine positive ganze Zahl größer oder gleich 2 ist;
Bestimmen (S306) einer ersten Zeit-Frequenz-Ressource, die verwendet wird, um die ersten Daten zum i-ten Mal zu empfangen, durch die zweite Endgerätevorrichtung basierend auf der Menge n von Übertragungszeiten und den Intervallanzeigeinformationen;
und
Empfangen (S307) der ersten Daten, die durch die erste Endgerätevorrichtung gesendet werden, durch die zweite Endgeräteeinrichtung auf der Zeit-Frequenz-Ressource,
wobei das Bestimmen (S306) einer ersten Zeit-Frequenz-Ressource, die verwendet wird, um die ersten Daten zum i-ten Mal zu empfangen, durch die zweite Endgerätevorrichtung basierend auf der Menge n von Übertragungszeiten und den Intervallanzeigeinformationen Folgendes umfasst: Bestimmen einer Startposition im Zeitbereich zum Empfangen der ersten Daten zum i-ten Mal und einer Startposition im Frequenzbereich zum Empfangen der ersten Daten zum i-ten Mal durch die zweite Endgerätevorrichtung; und Bestimmen der ersten Zeit-Frequenz-Ressource basierend auf der Startposition im Zeitbereich und der Startposition im Frequenzbereich durch die zweite Endgerätevorrichtung.

8. Verfahren nach Anspruch 7, wobei die Startposition im Zeitbereich Folgendes erfüllt:

$$\left(t_n^{SL} + (i - 1) \times SF_{time-gap}\right)\% T_{max}^{SL},$$

wobei

$t_n^{SL}$ eine Startposition im Zeitbereich ist, wenn die erste Endgerätevorrichtung die ersten Daten erstmals sendet,

$SF_{time\text{-}gap}$ das Zeitbereichsintervall ist und $T_{max}^{SL}$ eine maximale Länge eines Ressourcenpools im Zeitbereich ist.

9. Verfahren nach Anspruch 7 oder 8, wobei die Startposition im Frequenzbereich Folgendes erfüllt:

$$(m + (i - 1) \times SF_{frequency\text{-}gap}) \% N_{subCH},$$

wobei
m eine Startposition im Frequenzbereich ist, wenn die erste Endgerätevorrichtung die ersten Daten erstmals sendet, $SF_{frequency\text{-}gap}$ das Frequenzbereichsintervall ist und $N_{subCH}$ eine Breite eines Ressourcenpools im Frequenzbereich ist.

10. Verfahren nach Anspruch 9, wobei das Frequenzbereichsintervall Folgendes erfüllt:

$$SF_{frequency\text{-}gap} = SF_{time\text{-}gap}/K \text{ oder } SF_{frequency\text{-}gap} = SF_{time\text{-}gap} \times K,$$

wobei
K eine ganze Zahl größer oder gleich 1 ist.

11. Verfahren nach Anspruch 7 oder 8, wobei die Startposition im Frequenzbereich Folgendes erfüllt:

$$(m + (i - 1) \times ((N_{subCH} - L_{subCH} + 1)/n)) \% N_{subCH},$$

wobei
m eine Startposition im Frequenzbereich ist, wenn die erste Endgerätevorrichtung die ersten Daten erstmals sendet, $N_{subCH}$ eine Breite eines Ressourcenpools im Frequenzbereich ist und $L_{subCH}$ eine durch die ersten Daten belegte Frequenzbereichsbreite ist.

12. Kommunikationseinrichtung (700), wobei die Einrichtung (700) Folgendes umfasst:

    ein Verarbeitungsmodul (720); und
    ein Sende-Empfangsmodul (710),
    wobei die Kommunikationseinrichtung (700) dazu konfiguriert ist, das Verfahren nach einem der Ansprüche 1-6 zu implementieren.

13. Kommunikationseinrichtung (700), wobei die Einrichtung (700) Folgendes umfasst:

    ein Sende-Empfangsmodul (710); und
    ein Verarbeitungsmodul (720),
    wobei die Kommunikationseinrichtung (700) dazu konfiguriert ist, das Verfahren nach einem der Ansprüche 7-11 zu implementieren.

14. Computerlesbares Speichermedium, wobei das computerlesbare Speichermedium ein Computerprogramm oder Anweisungen speichert; und wenn ein Computer das Computerprogramm oder die Anweisungen liest und ausführt, der Computer in die Lage versetzt wird, das Verfahren nach einem der Ansprüche 1 bis 6 durchzuführen.

15. Computerlesbares Speichermedium, wobei das computerlesbare Speichermedium ein Computerprogramm oder Anweisungen speichert; und wenn ein Computer das Computerprogramm oder die Anweisungen liest und ausführt, der Computer in die Lage versetzt wird, das Verfahren nach einem der Ansprüche 7 bis 11 durchzuführen.

**Revendications**

1. Procédé de transmission de données, dans lequel le procédé comprend :

    l'obtention (S301), par un premier dispositif terminal, d'une quantité n de temps de transmission et d'informations d'indication d'intervalle, dans lequel la quantité n de temps de transmission est une quantité de temps de transmission de premières données, dans lequel les informations d'indication d'intervalle sont utilisées pour indiquer un intervalle de domaine temporel, un intervalle de domaine fréquentiel ou un intervalle de domaine temporel et un intervalle de domaine fréquentiel, l'intervalle de domaine temporel est utilisé pour indiquer un intervalle de domaine temporel entre une ressource de domaine temporel pour envoyer les premières données une $i$-ième fois et une ressource de domaine temporel pour envoyer les premières données une $(i-1)$-ième fois, et l'intervalle de domaine fréquentiel est utilisé pour indiquer un intervalle de domaine fréquentiel entre une ressource de domaine fréquentiel pour envoyer les premières données une $i$-ième fois et une ressource de domaine fréquentiel pour envoyer les premières données une $(i-1)$-ième fois, dans lequel $i$ est utilisé pour indiquer que les premières données sont transmises une $i$-ième fois et $1 \leq i \leq n$, et $n$ est un entier positif supérieur ou égal à 2 ; l'envoi (S302), par le premier dispositif terminal, d'informations de commande de liaison latérale à un second dispositif terminal, dans lequel les informations de commande de liaison latérale sont utilisées pour indiquer la quantité $n$ de temps de transmission, les informations d'indication d'intervalle et $i$ ; la détermination (S304), par le premier dispositif terminal sur la base de la quantité $n$ de temps de transmission et des informations d'indication d'intervalle, d'une première ressource temps-fréquence utilisée pour envoyer les premières données pour la ième fois ; et l'envoi (S305), par le premier dispositif terminal, des premières données au second dispositif terminal sur la première ressource temps-fréquence, dans lequel la détermination (S304), par le premier dispositif terminal, d'une première ressource temps-fréquence utilisée pour envoyer les premières données pour la ième fois comprend : la détermination, par le premier dispositif terminal, d'une position de départ de domaine temporel pour envoyer les premières données pour la ième fois et d'une position de départ de domaine fréquentiel pour envoyer les premières données pour la ième fois ; et la détermination, par le premier dispositif terminal, de la première ressource temps-fréquence sur la base de la position de départ de domaine temporel et de la position de départ de domaine fréquentiel.

2. Procédé selon la revendication 1, dans lequel l'obtention (S301), par un premier dispositif terminal, d'une quantité $n$ d'informations d'indication de temps de transmission et d'intervalle comprend :

   la réception, par le premier dispositif terminal, de premières informations d'indication provenant d'un dispositif réseau, dans lequel les premières informations d'indication sont utilisées pour indiquer la quantité $n$ d'informations d'indication de temps de transmission et d'intervalle ; ou
   la détermination, par le premier dispositif terminal, de la quantité $n$ de temps de transmission et des informations d'indication d'intervalle sur la base de la qualité de service, QoS, correspondant aux premières données.

3. Procédé selon la revendication 1 ou 2, dans lequel la position de départ de domaine temporel satisfait :

$$\left( t_n^{SL} + (i-1) \times SF_{temps-intervalle} \right) \% T_{max}^{SL},$$

dans lequel $t_n^{SL}$ est une position de départ de domaine temporel pour l'envoi des premières données pour la première fois, $SF_{temps-intervalle}$ est l'intervalle du domaine temporel et $T_{max}^{SL}$ est une longueur maximale d'un groupe de ressources du domaine temporel.

4. Procédé selon l'une quelconque des revendications 1 à 3, dans lequel la position de départ de domaine fréquentiel satisfait :

$$(m + (i-1) \times SF_{fréquence-intervalle}) \% N_{SubCH},$$

dans lequel
$m$ est une position de départ de domaine fréquentiel pour l'envoi des premières données pour la première fois, $SF_{fréquence-intervalle}$ est l'intervalle du domaine fréquentiel et $N_{subCH}$ est une largeur d'un groupe de ressources du domaine fréquentiel.

5. Procédé selon la revendication 4, dans lequel l'intervalle de domaine fréquentiel satisfait :

$SF_{fréquence-intervalle} = SF_{temps-intervalle}/K$ ou $SF_{fréquence-intervalle} = SF_{temps-intervalle} \times K,$

dans lequel
$K$ est un entier supérieur ou égal à 1.

**6.** Procédé selon l'une quelconque des revendications 1 à 3, dans lequel la position de départ de domaine fréquentiel satisfait :

$$(m + (i - 1) \times ((N_{SubCH} - L_{SubCH} + 1)/n)) \% N_{SubCH},$$

dans lequel
$m$ est une position de départ de domaine fréquentiel pour l'envoi des premières données pour la première fois, $N_{subCH}$ est une largeur d'un groupe de ressources du domaine fréquentiel et $L_{subCH}$ est une largeur de domaine fréquentiel occupée par les premières données.

**7.** Procédé de transmission de données, dans lequel le procédé comprend :

la réception (S303), par un second dispositif terminal, des informations de commande de liaison latérale en provenance d'un premier dispositif terminal, dans lequel les informations de commande de liaison latérale sont utilisées pour indiquer une quantité n de temps de transmission, des informations d'indication d'intervalle, et i, dans lequel la quantité n de temps de transmission est une quantité de temps de transmission des premières données, i est utilisé pour indiquer que les premières données sont transmises une i-ième fois, les informations d'indication d'intervalle sont utilisées pour indiquer un intervalle de domaine temporel, un intervalle de domaine fréquentiel, ou un intervalle de domaine temporel et un intervalle de domaine fréquentiel, l'intervalle de domaine temporel est utilisé pour indiquer un intervalle de domaine temporel entre une ressource de domaine temporel pour envoyer les premières données une i-ième fois et une ressource de domaine temporel pour envoyer les premières données une (i-1)-ième fois, et l'intervalle de domaine fréquentiel est utilisé pour indiquer un intervalle de domaine fréquentiel entre une ressource de domaine fréquentiel pour envoyer les premières données une i-ième fois et une ressource de domaine fréquentiel pour envoyer les premières données une (i-1)-ième fois, dans lequel $1 \leq i \leq n$, et n est un entier positif supérieur ou égal à 2 ;
la détermination (S306), par le second dispositif terminal sur la base de la quantité n de temps de transmission et des informations d'indication d'intervalle, d'une première ressource temps-fréquence utilisée pour recevoir les premières données pour la i-ième fois ; et
la réception (S307), par le second dispositif terminal sur la première ressource temps-fréquence, des premières données envoyées par le premier dispositif terminal,
dans lequel la détermination (S306), par le second dispositif terminal sur la base de la quantité n de temps de transmission et des informations d'indication d'intervalle, d'une première ressource temps-fréquence utilisée pour recevoir les premières données pour la i-ième fois comprend : la détermination, par le second dispositif terminal, d'une position de départ de domaine temporel pour recevoir les premières données pour la i-ième fois et d'une position de départ de domaine fréquentiel pour recevoir les premières données pour la i-ième fois ; et la détermination, par le second dispositif terminal, de la première ressource temps-fréquence sur la base de la position de départ de domaine temporel et de la position de départ de domaine fréquentiel.

**8.** Procédé selon la revendication 7, dans lequel la position de départ de domaine temporel satisfait :

$$\left(t_n^{SL} + (i - 1) \times SF_{temps-intervalle}\right) \% T_{max}^{SL},$$

dans lequel $t_n^{SL}$ est une position de départ de domaine temporel lorsque le premier dispositif terminal envoi les premières données pour la première fois, $SF_{temps-intervalle}$ est l'intervalle du domaine temporel et $T_{max}^{SL}$ est une longueur maximale d'un groupe de ressources du domaine temporel.

**9.** Procédé selon la revendication 7 ou 8, dans lequel la position de départ de domaine fréquentiel satisfait :

$$(m + (i - 1) \times SF_{fréquence-intervalle}) \% N_{subCH},$$

dans lequel
$m$ est une position de départ de domaine fréquentiel lorsque le dispositif terminal envoi les premières données pour la première fois, $SF_{fréquence-intervalle}$ est l'intervalle du domaine fréquentiel et $N_{subCH}$ est une largeur d'un groupe de ressources du domaine fréquentiel.

10. Procédé selon la revendication 9, dans lequel l'intervalle de domaine fréquentiel satisfait :

$$SF_{fréquence\text{-}intervalle} = SF_{temps\text{-}intervalle}/K \text{ ou } SF_{fréquence\text{-}intervalle} = SF_{temps\text{-} intervalle} \times K,$$

dans lequel $K$ est un entier supérieur ou égal à 1.

11. Procédé selon la revendication 7 ou 8, dans lequel la position de départ de domaine fréquentiel satisfait :

$$(m + (i - 1) \times ((N_{SubCH} - L_{SubCH} + 1)/n)) \% N_{SubCH},$$

dans lequel
$m$ est une position de départ de domaine fréquentiel lorsque le premier dispositif terminal envoi les premières données pour la première fois, $N_{subCH}$ est une largeur d'un groupe de ressources du domaine fréquentiel et $L_{subCH}$ est une largeur de domaine fréquentiel occupée par les premières données.

12. Appareil de communication (700), dans lequel l'appareil (700) comprend :

un module de traitement (720) ; et
un module émetteur-récepteur (710),
dans lequel l'appareil de communication (700) est configuré pour mettre en œuvre le procédé selon l'une quelconque des revendications 1 à 6.

13. Appareil de communication (700), dans lequel l'appareil (700) comprend :

un module émetteur-récepteur (710) ; et
un module de traitement (720),
dans lequel l'appareil de communication (700) est configuré pour mettre en œuvre le procédé selon l'une quelconque des revendications 7 à 11.

14. Support de stockage lisible par ordinateur, dans lequel le support de stockage lisible par ordinateur stocke un programme informatique ou des instructions ; et lorsqu'un ordinateur lit ou exécute le programme informatique ou les instructions, l'ordinateur est activé pour réaliser le procédé selon l'une quelconque des revendications 1 à 6.

15. Support de stockage lisible par ordinateur, dans lequel le support de stockage lisible par ordinateur stocke un programme informatique ou des instructions ; et lorsqu'un ordinateur lit et exécute le programme informatique ou les instructions, l'ordinateur est activé réaliser le procédé selon l'une quelconque des revendications 7 à 11.

FIG. 1

FIG. 2

```
┌─────────────────┐                              ┌─────────────────┐
│  First terminal │                              │ Second terminal │
│     device      │                              │     device      │
└─────────────────┘                              └─────────────────┘
```

Step S301: Obtain a quantity n of transmission times and interval indication information

Step S302: Send sidelink control information to the second terminal device

Step S303: Receive the sidelink control information from the first terminal device

Step S304: Determine, based on the quantity n of transmission times and the interval indication information, a first time-frequency resource used to send first data for an $i^{th}$ time

Step S306: Determine, based on the quantity n of transmission times and the interval indication information, the first time-frequency resource used to receive the first data for the $i^{th}$ time

Step S305: Send the first data to the second terminal device on the first time-frequency resource

Step S307: Receive, on the first time-frequency resource, the first data sent by the first terminal device

FIG. 3

FIG. 4

FIG. 5

FIG. 6a

FIG. 6b

FIG. 7

FIG. 8